(19) Europäisches Patentamt
European Patent Office
Office européen des brevets

(11) EP 3 483 019 B1

(12) EUROPÄISCHE PATENTSCHRIFT

(45) Veröffentlichungstag und Bekanntmachung des Hinweises auf die Patenterteilung:
**16.06.2021 Patentblatt 2021/24**

(51) Int Cl.:
***B60W 10/12*** *(2012.01)* ***B60W 10/16*** *(2012.01)*
***B60W 40/064*** *(2012.01)* ***B60W 40/068*** *(2012.01)*

(21) Anmeldenummer: **18202337.4**

(22) Anmeldetag: **24.10.2018**

(54) **VERFAHREN ZUM BETREIBEN EINES NUTZFAHRZEUGS MIT ALLRADANTRIEB UND DIFFERENTIALSPERRE**

METHOD FOR OPERATING A COMMERCIAL VEHICLE WITH FOUR-WHEEL DRIVE AND DIFFERENTIAL LOCKING

PROCÉDÉ DE FONCTIONNEMENT D'UN VÉHICULE UTILITAIRE POURVU DE TRANSMISSION INTÉGRALE ET DE BLOCAGE DU DIFFÉRENTIEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.10.2017 DE 102017219271**

(43) Veröffentlichungstag der Anmeldung:
**15.05.2019 Patentblatt 2019/20**

(73) Patentinhaber: **Deere & Company**
**Moline, IL 61265 (US)**

(72) Erfinder:
- **Woopen, Thomas**
  **68163 Mannheim (DE)**
- **Reinmuth, Florian**
  **68163 Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(56) Entgegenhaltungen:
**EP-A1- 2 730 447 WO-A1-02/49896**
**GB-A- 2 414 525**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft ein Verfahren zum Betreiben eines Nutzfahrzeugs mit den Merkmalen des Oberbegriffs des Anspruchs 1.

Ein derartiges Verfahren ist aus DE 10 2015 212 897 A1 bekannt. Dort weist ein landwirtschaftliches Nutzfahrzeug einen Allradantrieb sowie ein Vorderachs-Differential an der Vorderachse und ein Hinterachs-Differential an der Hinterachse auf. Eine Kontrolleinheit steuert abhängig von verschiedenen Kriterien eine Allradkupplung zur Aktivierung und Deaktivierung des Allradantriebs an.

Ergänzend wird in WO 02/49896 A1, GB 2 414 525 A und EP 2 730 447 A1 in Zusammenhang mit einem derartigen Nutzfahrzeug vorgeschlagen, eine Hinterachs-Differentialsperre in Abhängigkeit einer Hinterradschlupfgröße anzusteuern, wobei die Hinterradschlupfgröße einen an der Hinterachse auftretenden Antriebsradschlupf charakterisiert.

Der vorliegenden Erfindung liegt die Aufgabe zugrunde, die Traktion eines allradgetriebenen Nutzfahrzeugs hinsichtlich einer bedarfsgerechten Aktivierung der Differentialsperre weiter zu verbessern.

Diese Aufgabe wird durch ein Verfahren mit den Merkmalen des Patentanspruchs 1 gelöst.

Gemäß Patentanspruch 1 ist ein Verfahren zum Betreiben eines Nutzfahrzeugs vorgesehen, wobei das Nutzfahrzeug eine von einem Antriebsmotor angetriebene Hinterachse, ein Differential an der Hinterachse (nachfolgend kurz Hinterachs-Differential) und eine zur Durchführung eines Allradbetriebs zuschaltbare Vorderachse aufweist. Weiterhin ist eine Differentialsperre zur Sperrung des durch das Hinterachs-Differential bewirkten Drehzahlausgleichs an der Hinterachse vorgesehen. Die Differentialsperre wird in Abhängigkeit einer Motorleistung P des Antriebsmotors aktiviert, wobei die Motorleistung P mit einem vorgegebenen Leistungs-Grenzwert $P_{lim1}$ verglichen wird, bevor die Differentialsperre aktiviert wird.

Die sich aus der Motorleistung P ergebende Motorauslastung wird hier als Indikator für den maximal zu erwartenden Antriebsschlupf herangezogen, falls letzterer nicht bekannt ist. Auf diese Weise kann eine unnötige Aktivierung der Differentialsperre bei niedriger Motorauslastung und demzufolge niedrigem Antriebsschlupf vermieden werden.

Dabei wird im Sinne einer bedarfsgerechten Aktivierung der Differentialsperre vor einer Aktivierung die Motorleistung P mit dem vorgegebenen Leistungs-Grenzwert $P_{lim}$ verglichen. Eine Aktivierung ist dann von dem Vergleichsergebnis abhängig. So kann der vorgegebene Leistungs-Grenzwert $P_{lim}$ beispielsweise einen Wert in dem Bereich von 70% bis 90% der Motorauslastung haben. Ist die aktuell ermittelte prozentuale Motorauslastung mindestens so groß wie der vorgegebene Leistungs-Grenzwert $P_{lim}$, so kann auf einen erhöhten Antriebsleistungsbedarf und damit indirekt auf eine entsprechende Zunahme des Antriebsradschlupfs geschlossen werden. Folglich ist bei diesem Vergleichsergebnis eine automatisierte Aktivierung der Differentialsperre sinnvoll, um den Antriebsradschlupf effizient zu reduzieren.

Informationen über die Motorleistung P können technisch mit geringem Aufwand bereitgestellt werden, wenn die Motorleistung P anhand des momentanen Motorbetriebspunkts aus einer in einem Motorsteuergerät hinterlegten Motorkennlinie in Form einer prozentualen Motorauslastung ermittelt wird. Letztere steht dann insbesondere an einem Bus (z.B. CAN) des Nutzfahrzeugs als entsprechende Daten bereit.

Vorteilhafte Ausgestaltungen des erfindungsgemäßen Verfahrens gehen aus den Unteransprüchen hervor.

Vorzugsweise wird die Differentialsperre zur Sperrung des Hinterachs-Differentials in Abhängigkeit von mindestens einer weiteren der folgenden Größen aktiviert:

- einer Hinterradschlupfgröße $\mu_H$, die einen an der Hinterachse auftretenden Antriebsradschlupf charakterisiert,
- einem Status $S_{B_HR}$, $S_{B_HL}$ mindestens einer der Hinterachse zugeordneten Bremsvorrichtung, und
- einem Status $S_{FWD}$ bezüglich des Allradantriebs.

Die zusätzliche Berücksichtigung mindestens einer der vorgenannten Kriterien, Parameter oder Größen ermöglicht eine fahrerunabhängige, automatisierte Aktivierung der Differentialsperre bei spezifischen Randbedingungen. Somit kann die Traktion des Nutzfahrzeugs automatisiert erhöht werden, wenn beispielsweise eine Aktivierung des Allradantriebs keine ausreichende Traktion des Nutzfahrzeugs gewährleistet. Dies kann z.B. bei einer schweren Bodenbearbeitung oder einer schwierigen Bodenbeschaffenheit mit unterschiedlichen Radlasten rechts und links der Fall sein, wie beispielsweise beim Pflügen. In solchen Fällen bietet eine automatisierte Aktivierung der Differentialsperre eine bedarfsgerechte Traktionsunterstützung, da das Antriebsmoment an der Hinterachse nicht mehr im Verhältnis 50% rechts/50% links, sondern bedarfsgerecht an der Hinterachse rechts und links verteilt wird. Der Fahrer des Nutzfahrzeugs wird durch diese automatisierte Traktionsunterstützung erheblich entlastet.

Demzufolge ist es vorteilhaft, für eine automatisierte Aktivierung der Differentialsperre einen Antriebsradschlupf an der Hinterachse zu berücksichtigen.

Da eine Sperrung des Hinterachs-Differentials bei einem Bremsvorgang normalerweise vermieden werden sollte, kann auch ein Status mindestens einer der Hinterachse zugeordneten Bremsvorrichtung überprüft werden, um in Abhängigkeit von diesem Überprüfungsergebnis über eine Aktivierung der Differentialsperre zu entscheiden. Vorzugsweise ist jedem Hinterrad eine Bremsvorrichtung zugeordnet, welche getrennt voneinander betätigt werden können. Der aktuelle Status ergibt sich insbesondere aus einem Signal, ob die jeweilige Bremsvorrichtung zur Bremsung des zugeordneten Hinterrads aktuell betätigt ist oder nicht.

Alternativ oder zusätzlich ist auch die Berücksichtigung eines Status bezüglich des Allradantriebs möglich, um in Abhängigkeit des festgestellten Status über eine Aktivierung der Differentialsperre zu entscheiden. So ist beispielsweise bei einer festgestellten fahrerabhängigen Deaktivierung des Allradantriebs eine Aktivierung der Differentialsperre meist nicht effizient oder sinnvoll. Der Status bezüglich des Allradantriebs kann beispielsweise "EIN" (fahrerabhängige Aktivierung), "AUS" (fahrerabhängige Deaktivierung) oder "AUTO" (fahrerunabhängige, automatisierte Aktivierung (EIN) und Deaktivierung (AUS) des Allradantriebs) sein. Der aktuelle Status ist vorzugsweise in einer mikroprozessorgesteuerten Kontrolleinheit hinterlegt, welche zur Durchführung des Verfahrens verwendet wird, insbesondere zur Erfassung, Ermittlung, Berechnung und/oder Verarbeitung der vorgenannten und ggf. weiterer Kriterien, Parameter und Größen.

Bei dem Nutzfahrzeug handelt es sich beispielsweise um ein landwirtschaftliches Fahrzeug, insbesondere Traktor, oder um eine Baumaschine. Der Antriebsmotor ist vorzugsweise ein als Dieselmotor ausgebildeter Verbrennungsmotor.

Mit geringem technischen Aufwand lässt sich die Hinterradschlupfgröße $\mu_H$ vorteilhaft ermitteln bzw. berechnen, indem das Verhältnis zwischen der momentanen Fahrtgeschwindigkeit v des Nutzfahrzeugs und einer an der Hinterachse auftretenden Radumfangsgeschwindigkeit $v_H$

$$\mu_H = (v_H - v) / v_H$$

gebildet wird. Hierbei wird die Radumfangsgeschwindigkeit $v_H$ aus dem als bekannt vorausgesetzten Reifenumfang der Hinterräder in Abhängigkeit einer zugehörigen Raddrehzahl $n_H$ ermittelt.

Die momentane Fahrtgeschwindigkeit lässt sich beispielsweise durch Erfassung zeitlicher Positionsänderungen des Nutzfahrzeugs ableiten. Letztere können mittels eines GPS-Navigationssystems in Form entsprechender Positionsinformationen bereitgestellt werden.

Für eine effiziente Funktionalität der automatisierten Aktivierung der Differentialsperre ist es vorteilhaft, die ermittelte Hinterradschlupfgröße $\mu_H$ zunächst mit mindestens einem vorgegebenen Schlupf-Grenzwert zu vergleichen, bevor über eine Aktivierung der Differentialsperre entschieden wird. Vorzugsweise wird die ermittelte Hinterradschlupfgröße $\mu_H$ nacheinander mit einem ersten Schlupf-Grenzwert $\mu_{lim1}$ und einem zweiten Schlupf-Grenzwert $\mu_{lim2}$ verglichen. Hierdurch können geeignete Antriebsschlupf-Bereiche definiert werden, innerhalb derer eine Aktivierung der Differentialsperre zur Erhöhung der Traktion sinnvoll ist. Beispielsweise ist der erste Schlupf-Grenzwert $\mu_{lim1}$ größer (z.B. 40% Antriebsschlupf) als der zweite Schlupf-Grenzwert $\mu_{lim2}$ (z.B. 15% Antriebsschlupf).

Für eine effiziente Traktionsunterstützung ist es vorteilhaft, wenn die Differentialsperre erst dann - abgesehen von der Erfüllung etwaiger zusätzlicher vorgegebener Bedingungen - aktiviert werden kann, wenn der Allradantrieb bereits aktiviert ist.

Um die Effizienz der eingesetzten Differentialsperre weiter zu erhöhen, wird diese vorzugsweise automatisiert deaktiviert. Eine fahrerunabhängige, automatisierte Deaktivierung erfolgt insbesondere in Abhängigkeit von mindestens einer der folgenden Kriterien, Parameter oder Größen:

- einer Hinterradschlupfgröße $\mu_H$, die einen an der Hinterachse auftretenden Antriebsradschlupf charakterisiert,
- einer Motorleistung P des Antriebsmotors,
- einem Status mindestens einer der Hinterachse zugeordneten Bremsvorrichtung, und
- einem Status bezüglich der Differentialsperre.

Die Bedeutung der hier genannten Kriterien, Parameter oder Größen ist bereits im Zusammenhang mit der Aktivierung der Differentialsperre ausführlich beschrieben worden. Somit kann auch eine Deaktivierung der Differentialsperre in Abhängigkeit von mindestens einem Schlupf-Grenzwert und/oder mindestens einem Leistungs-Grenzwert eingeleitet werden. Folglich kann bei erfasster leichterer Arbeitsbewältigung durch das Nutzfahrzeug die Sperrung des Hinterachs-Differentials automatisiert wieder aufgehoben werden. Da der Status mindestens einer der Hinterachse zugeordneten Bremsvorrichtung berücksichtigt wird, kann die Differentialsperre auch im Falle eines Bremsvorganges automatisiert deaktiviert werden, um eventuelle Ausweichmanöver beim Bremsen schon frühzeitig zu ermöglichen.

Die Werte der für eine Deaktivierung der Differentialsperre vorgegebenen Schlupf-Grenzwerte und/oder Leistungs-Grenzwerte sind vorzugsweise kleiner als die Werte der jeweiligen Grenzwerte, welche bei dem Verfahren zur Aktivierung der Differentialsperre vorgegeben werden.

Alternativ oder zusätzlich ist auch die Berücksichtigung eines Status bezüglich der Differentialsperre möglich, um in Abhängigkeit des festgestellten Status über eine Aktivierung der Differentialsperre zu entscheiden. Der Status kann beispielsweise "EIN" (fahrerabhängige Aktivierung), "AUS" (fahrerabhängige Deaktivierung) oder "AUTO" (fahrerunabhängige, automatisierte Aktivierung (EIN) und Deaktivierung (AUS) der Differentialsperre) sein. Der aktuelle Status ist vorzugsweise in einer mikroprozessorgesteuerten Kontrolleinheit hinterlegt, welche zur Durchführung des Verfahrens verwendet wird, insbesondere zur Erfassung, Ermittlung, Berechnung und/oder Verarbeitung der vorgenannten und ggf.

weiterer Kriterien, Parameter und Größen. Beispielsweise wird der Status "AUTO (AUS)" bei Überschreiten eines vorgegebenen Grenz-Lenkwinkels oder bei Überschreiten einer vorgegebenen Grenz-Geschwindigkeit eingestellt, um bei einer Kurvenfahrt oder bei hohen Geschwindigkeiten des Nutzfahrzeugs ein Sperren des Hinterachs-Differentials zu vermeiden. Der Status "AUTO (AUS)" führt automatisch zu einer Deaktivierung der Differentialsperre.

Das Nutzfahrzeug weist vorzugsweise eine geeignete Anordnung zur Durchführung des Verfahrens auf. Diese Anordnung enthält insbesondere eine Kontrolleinheit, welche die vorgenannten Informationen und Daten erfasst, ermittelt und verarbeitet und hierdurch eine bedarfsgerechte und automatisierte, d.h. fahrerunabhängige Aktivierung und Deaktivierung sowohl des Allradantriebs als auch der Differentialsperre veranlassen kann.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1 ein Ausführungsbeispiel eines Nutzfahrzeugs mit einer Anordnung zur Durchführung des Verfahrens,

Fig. 2 ein Flussdiagramm, das ein Verfahren zur Aktivierung einer Differentialsperre an der Hinterachse des Nutzfahrzeugs gemäß Fig. 1 wiedergibt, und

Fig. 3 ein Flussdiagramm, das ein Verfahren zur Deaktivierung der Differentialsperre an der Hinterachse des Nutzfahrzeugs gemäß Fig. 1 wiedergibt.

Fig. 1 zeigt schematisch ein Nutzfahrzeug, welches beispielsgemäß als ein allradgetriebener Traktor 10 ausgebildet ist. Der Traktor 10 weist eine Hinterachse 12 mit Hinterrädern 14 und eine zur Durchführung eines Allradantriebs zuschaltbare Vorderachse 16 mit Vorderrädern 18 auf. Ein als Dieselmotor ausgebildeter Verbrennungsmotor 20 steht über eine Kurbelwelle mit einem Fahrzeuggetriebe 21 in Verbindung. Das Fahrzeuggetriebe 21 umfasst einen über ein Hinterachs-Differential 24 mit der Hinterachse 12 verbundenen Hinterachs-Getriebeabgang 26 sowie einen über eine Allradkupplung 28 zuschaltbaren Vorderachs-Getriebeabgang 30. Der Vorderachs-Getriebeabgang 30 ist über ein Vorderachs-Differential 32 mit der Vorderachse 16 verbindbar. An der Hinterachse 12 ist außerdem eine Differentialsperre 22 angeordnet, welche bedarfsweise aktivierbar ist zur Sperrung des Hinterachs-Differentials 24.

Eine Anordnung 34 ist Bestandteil eines Motor- und Getriebemanagementsystems des Nutzfahrzeugs und umfasst eine mikroprozessorgesteuerte Kontrolleinheit 36. Letztere dient einer Koordination des Allradantriebs und der Differentialsperre 22, einschließlich einer fahrerunabhängig durchgeführten Aktivierung und Deaktivierung.

Die Betätigung der Allradkupplung 28 durch die Kontrolleinheit 36 erfolgt vorzugsweise elektrohydraulisch auf hier nicht im Einzelnen dargestellte Weise.

Den Vorder- bzw. Hinterrädern 18 bzw. 14 des Traktors 10 zugeordnete Raddrehzahl-Sensoren 38 bzw. 40 dienen der Erfassung zugehöriger Raddrehzahlen nv bzw. $n_H$, wobei die von den Raddrehzahl-Sensoren 38 bzw. 40 erzeugten Drehzahlsignale von der Kontrolleinheit 36 ausgewertet werden.

Außerdem erhält die Kontrolleinheit 36 Informationen bezüglich des momentanen Motorbetriebspunktes des Verbrennungsmotors 20. Die Bereitstellung einer entsprechenden Motorkennlinie $K_M$ erfolgt seitens eines Motorsteuergeräts 42. Des Weiteren dient ein GPS-Navigationssystem 44 einer Positionserfassung des Traktors 10.

Ein Betätigungselement 46 in Form eines Schalters erlaubt eine manuelle Aktivierung und Deaktivierung des Allradantriebs. Das Betätigungselement 46 ist beispielsweise als mechanischer Schalter ausgebildet. Im Falle einer grafischen Bedienoberfläche ist auch eine softwaremäßige Implementierung des Betätigungselements 46 in Form eines auf einem Touchscreen eingeblendeten Bedienelements möglich.

Ein weiteres Betätigungselement 48 in Form eines Schalters erlaubt eine manuelle Aktivierung und Deaktivierung der Differentialsperre 22. Das Betätigungselement 48 ist - analog zum Betätigungselement 46 - beispielsweise als mechanischer Schalter oder Bedienelement auf einem Touchscreen ausgebildet.

Der Fahrer wird mittels eines Anzeigeelements 50 über den aktuellen Aktivierungszustand (aktiviert oder deaktiviert) des Allradantriebs informiert. Dasselbe Anzeigeelement 50 oder ein weiteres Anzeigeelement dient dazu, den Fahrer bezüglich des aktuellen Aktivierungszustands (aktiviert oder deaktiviert) der Differentialsperre 22 zu informieren. Für eine Aktualisierung des jeweiligen Aktivierungszustandes ermittelt die Kontrolleinheit 36 u.a. die Schaltstellungen der Betätigungselemente 46 und 48. Hierzu sind ein aktueller Status $S_{FWD}$ des Betätigungselements 46 und ein aktueller Status $S_{DIFF_S}$ des Betätigungselements 48 in der Kontrolleinheit 36 hinterlegt.

Beispielsweise kann der Status $S_{FWD}$ der Kontrolleinheit 36 bzw. des Betätigungselements 46 folgende Zustände aufweisen: "EIN" (fahrerabhängig dauerhafte Aktivierung des Allradantriebs), "AUS" (fahrerabhängig dauerhafte Deaktivierung des Allradantriebs) und "AUTO" (fahrerunabhängige Aktivierung (EIN) und Deaktivierung (AUS) des Allradantriebs).

Der Status $S_{DIFF_S}$ der Kontrolleinheit 36 bzw. des Betätigungselements 48 kann beispielsweise folgende Zustände aufweisen: "EIN" (fahrerabhängig dauerhafte Aktivierung der Differentialsperre 22), "AUS" (fahrerabhängig dauerhafte Deaktivierung der Differentialsperre 22) und "AUTO" (fahrerunabhängige Aktivierung (EIN) und Deaktivierung (AUS) der Differentialsperre 22).

Fig. 2 zeigt ein Flussdiagramm, das ein Verfahren zur Aktivierung der Differentialsperre 22 wiedergibt. Das von der Kontrolleinheit 36 durchgeführte Verfahren wird bei Erkennung einer deaktivierten Differentialsperre 22 (DIFF_S = deaktiviert) und bei bereits aktiviertem Allradantrieb (FWD = aktiviert) in einem Startschritt 100 initialisiert. Die Kontrolleinheit 36 überprüft unterschiedliche Kriterien bzw. physikalische Größen und aktiviert die Differentialsperre 22 (DIFF_S = aktiviert) nach Erfassung oder Überprüfung unterschiedlich möglicher Ausgangssituationen.

Bei einer Ausgangssituation wird zunächst in einem Schritt 102 der aktuelle Status $S_{FWD}$ des Betätigungselements 46 geprüft. Im Falle des Status "AUTO" (fahrerunabhängige Aktivierung und Deaktivierung des Allradantriebs) wird in einem nächsten Schritt 104 der aktuelle Status von zwei hier nicht näher dargestellten Bremsvorrichtungen geprüft, welche jeweils einem Hinterrad 14 zugeordnet sind. Hierdurch können die beiden Hinterräder 14 unabhängig voneinander bedarfsweise abgebremst werden.

Wird im Schritt 104 erkannt, dass weder das rechte Hinterrad 14 abgebremst (Status $S_{B_HR} = 0$) noch das linke Hinterrad 14 abgebremst (Status $S_{B_HL} = 0$) wird, so wird in einem weiteren Schritt 106 überprüft, ob die momentane Fahrtgeschwindigkeit v des Traktors 10 gegenüber dem Erdboden ermittelt werden kann. Die momentane Fahrtgeschwindigkeit v wird von der Kontrolleinheit 36 durch Erfassung zeitlicher Positionsänderungen des Traktors 10 abgeleitet. Diese Positionsänderungen werden der Kontrolleinheit 36 seitens des GPS-Navigationssystems 44 in Form entsprechender Positionsinformationen zur Verfügung gestellt.

Ist die momentane Fahrtgeschwindigkeit v im Schritt 106 ermittelt worden, berechnet die Kontrolleinheit 36 in einem weiteren Schritt 108 eine an der Hinterachse 12 auftretende Radumfangsgeschwindigkeit $v_H$ und danach eine Hinterradschlupfgröße $\mu_H$. Die Radumfangsgeschwindigkeit $v_H$ wird aus dem als bekannt vorausgesetzten Reifenumfang der Hinterräder 14 in Abhängigkeit der mittels der Raddrehzahlsensoren 40 erfassten Raddrehzahl $n_H$ ermittelt. Die einen an der Hinterachse 12 des Traktors 10 auftretenden Antriebsradschlupf charakterisierende Hinterradschlupfgröße $\mu_H$ wird berechnet, indem ein Verhältnis zwischen der momentanen Fahrtgeschwindigkeit v des Traktors 10 und der Radumfangsgeschwindigkeit $v_H$ gebildet wird:

$$\mu_H = (v_H - v)/v_H$$

In einem Schritt 110 vergleicht die Kontrolleinheit 36 die berechnete Hinterradschlupfgröße $\mu_H$ mit einem vorgegebenen ersten Schlupf-Grenzwert $\mu_{lim1}$, der beispielsweise einem Antriebsschlupf von 40% entspricht.

Ist die berechnete Hinterradschlupfgröße $\mu_H$ kleiner als der vorgegebene erste Schlupf-Grenzwert $\mu_{lim1}$, wird in einem Schritt 112 die Hinterradschlupfgröße $\mu_H$ noch mit einem vorgegebenen zweiten Schlupf-Grenzwert $\mu_{lim2}$ verglichen, der beispielsweise einem Antriebsschlupf von 15% entspricht. Hierbei kann ggf. noch unterschieden werden, ob es sich um einen negativen Schlupf (z.B. Bergabfahrt des Traktors mit Anhänger) oder um einen positiven Schlupf (z.B. Bergauffahrt des Traktors mit Anhänger) handelt.

Vorzugsweise ist der absolute Wert des vorgegebenen ersten Schlupf-Grenzwerts $\mu_{lim1}$ größer als der absolute Wert des vorgegebenen zweiten Schlupf-Grenzwerts $\mu_{lim2}$.

Wird in dem Schritt 112 festgestellt, dass die Hinterradschlupfgröße $\mu_H$ größer ist als der vorgegebene zweite Schlupf-Grenzwert $\mu_{lim2}$, so aktiviert die Kontrolleinheit 36 die Differentialsperre 22 in einem Schritt 114 fahrerunabhängig (DIFF_S = aktiviert). Der zu Beginn dieses Verfahrens bereits aktivierte Allradantrieb bleibt aktiviert (FWD = aktiviert). Nach dem Schritt 114 wird das Verfahren in einem Endschritt 116 beendet.

Sollte im Schritt 106 festgestellt werden, dass der Traktor 10 über kein GPS-Navigationssystem 44 oder dergleichen zur Ermittlung der momentanen Fahrtgeschwindigkeit v verfügt, folgt nach dem Schritt 106 ein Schritt 118. Im Schritt 118 wird die an der Hinterachse 12 auftretende Radumfangsgeschwindigkeit $v_H$ ermittelt, wie bereits anhand Schritt 108 erläutert. Danach wird im Schritt 120 geprüft, ob die ermittelte Radumfangsgeschwindigkeit $v_H > 0$ km/h beträgt. Hierdurch wird sichergestellt, dass die Differentialsperre 22 nur bei einem fahrenden Traktor 10 aktiviert wird.

Ist die Radumfangsgeschwindigkeit $v_H > 0$ km/h, ermittelt die Kontrolleinheit 36 in einem nächsten Schritt 122 eine Motorleistung P des Verbrennungsmotors 20. Dabei wird die Motorleistung P von der Kontrolleinheit 36 anhand des momentanen Motorbetriebspunkts durch Auslesen einer in einem Motorsteuergerät 42 hinterlegten Motorkennlinie $K_M$ in Form einer prozentualen Motorauslastung ermittelt.

In einem folgenden Schritt 124 wird die ermittelte Motorleistung P mit einem vorgegebenen ersten Leistungs-Grenzwert $P_{lim1}$ verglichen, der beispielsweise einer prozentualen Motorauslastung im Bereich von 70% bis 90% entspricht. Wird in dem Schritt 124 festgestellt, dass die Motorleistung P mindestens so groß ist wie der vorgegebene erste Leistungs-Grenzwert $P_{lim1}$, so aktiviert die Kontrolleinheit 36 die Differentialsperre 22 in dem Schritt 114 fahrerunabhängig, wie bereits erläutert.

In einer weiteren Ausgangssituation bei dem Startschritt 100 überprüft die Kontrolleinheit 36 in einem Schritt 102a den Status $S_{DIFF_S}$ des Betätigungselements 48. Im Falle des Status "EIN" wird in einem nächsten Schritt 104a geprüft, ob die bereits erwähnten Bremsvorrichtungen für die beiden Hinterräder 14 betätigt sind oder nicht. Wird im Schritt 104a erkannt, dass weder die Bremsvorrichtung für das rechte Hinterrad 14 betätigt wird (Status $S_{B_HR}$ = 0) noch die Bremsvorrichtung für das linke Hinterrad 14 betätigt wird (Status $S_{B_HL}$ = 0), so aktiviert die Kontrolleinheit 36 die Differentialsperre 22 in dem Schritt 114 fahrerunabhängig, wie bereits erläutert.

Fig. 3 zeigt ein Flussdiagramm, das ein Verfahren zur Deaktivierung der Differentialsperre 22 wiedergibt. Das von der Kontrolleinheit 36 durchgeführte Verfahren wird bei Erkennung einer aktivierten Differentialsperre 22 (DIFF_S = aktiviert) und bei aktiviertem Allradantrieb (FWD = aktiviert) in einem Startschritt 200 initialisiert. Die Kontrolleinheit 36 überprüft unterschiedliche Kriterien bzw. physikalische Größen und deaktiviert die Differentialsperre 22 (DIFF_S = deaktiviert) nach Erfassung oder Überprüfung unterschiedlich möglicher Ausgangssituationen.

Bei einer Ausgangssituation wird zunächst in einem Schritt 202 geprüft, ob die bereits erläuterten Bremsvorrichtungen der beiden Hinterräder 14 zu deren Abbremsen betätigt sind oder nicht. Wird weder das rechte Hinterrad 14 gebremst (Status $S_{B_HR}$ = 0) noch das linke Hinterrad 14 gebremst (Status $S_{B_HL}$ = 0), so prüft die Kontrolleinheit 36 in einem nächsten Schritt 204 den Status $S_{DIFF_S}$ des Betätigungselements 48. Hat der Fahrer an das Betätigungselement 48 einen Befehl zum Abschalten bzw. Deaktivieren der Differentialsperre 22 gegeben, so wird im Schritt 204 der Status $S_{DIFF_S}$ = AUS festgestellt. In diesem Fall deaktiviert die Kontrolleinheit 36 die Differentialsperre 22 in einem Schritt 206 (DIFF_S = deaktiviert). Der zu Beginn dieses Verfahrens bereits aktivierte Allradantrieb bleibt aktiviert (FWD = aktiviert). Nach dem Schritt 206 wird das Verfahren in einem Endschritt 208 beendet.

Bei einer weiteren Variante überprüft die Kontrolleinheit 36 nach dem Startschritt 200 in einem Schritt 302, ob aufgrund erfasster spezifischer physikalischer bzw. fahrdynamischer Randbedingungen eine automatisierte, d.h. fahrerunabhängige Deaktivierung der Differentialsperre 22 erfolgen soll. Beispielsweise soll bei erfasstem Überschreiten eines vorgegebenen Lenkwinkel-Grenzwerts (Kurvenfahrt) oder eines vorgegebenen Fahrtgeschwindigkeit-Grenzwerts des Traktors 10 von der Kontrolleinheit 36 automatisch veranlasst werden, dass die aktivierte Differentialsperre 22 deaktiviert wird. Die Erfassung derartiger physikalischer bzw. fahrdynamischer Randbedingungen ist im Schritt 302 mit dem Status $S_{DIFF_S}$ = AUTO (AUS) symbolisiert. Daraufhin deaktiviert die Kontrolleinheit 36 die Differentialsperre 22 in dem Schritt 206, wie bereits erläutert.

Bei einer weiteren Variante überprüft die Kontrolleinheit 36 nach dem Startschritt 200 in einem Schritt 402, ob die momentane Fahrtgeschwindigkeit v des Traktors 10 gegenüber dem Erdboden ermittelt werden kann. Kann die Fahrtgeschwindigkeit v ermittelt werden, so wird in einem nächsten Schritt 404 zunächst die an der Hinterachse 12 auftretende Radumfangsgeschwindigkeit $v_H$ und danach die Hinterradschlupfgröße $\mu_H$ berechnet. Um unnötige Wiederholungen zu vermeiden, wird bezüglich der Ermittlung der Fahrtgeschwindigkeit v, der Radumfangsgeschwindigkeit $v_H$ und der Hinterradschlupfgröße $\mu_H$ auf die entsprechenden Erläuterungen zum Flussdiagramm gemäß Fig. 2 verwiesen.

In einem nachfolgenden Schritt 406 vergleicht die Kontrolleinheit 36 die berechnete Hinterradschlupfgröße $\mu_H$ mit einem vorgegebenen dritten Schlupf-Grenzwert $\mu_{lim3,}$ der beispielsweise einem Antriebsschlupf von 10% entspricht. Vorzugsweise ist der vorgegebene dritte Schlupf-Grenzwert $\mu_{lim3}$ kleiner als der vorgegebene zweite Schlupf-Grenzwert $\mu_{lim2.}$ Ist die berechnete Hinterradschlupfgröße $\mu_H$ kleiner als der vorgegebene dritte Schlupf-Grenzwert $\mu_{lim3,}$ so deaktiviert die Kontrolleinheit 36 das Hinterachs-Differential 24 in dem Schritt 206, wie bereits erläutert. Anderenfalls kehrt das Verfahren wieder zum Schritt 402 zurück.

Sollte im Schritt 402 festgestellt werden, dass der Traktor 10 über kein GPS-Navigationssystem 44 verfügt bzw. die momentane Fahrtgeschwindigkeit v nicht ermittelt werden kann, folgt nach dem Schritt 402 ein Schritt 408. Im Schritt 408 ermittelt die Kontrolleinheit 36 die Motorleistung P des Verbrennungsmotors 20. Diesbezüglich wird zur Vermeidung unnötiger Wiederholungen auf die Erläuterungen zum Flussdiagramm gemäß Fig. 2, insbesondere zum Schritt 122 verwiesen.

In einem folgenden Schritt 410 wird die ermittelte Motorleistung P mit einem vorgegebenen zweiten Leistungs-Grenzwert $P_{lim2}$ verglichen, der beispielsweise einer prozentualen Motorauslastung von 80% entspricht. Vorzugsweise ist der vorgegebene erste Leistungs-Grenzwert $P_{lim1}$ größer als der vorgegebene zweite Leistungs-Grenzwert $P_{lim2}$.

Wird in dem Schritt 410 festgestellt, dass die Motorleistung P kleiner ist als der vorgegebene zweite Leistungs-Grenzwert $P_{lim1}$, so deaktiviert die Kontrolleinheit 36 die Differentialsperre 22 in dem Schritt 206 fahrerunabhängig, wie bereits erläutert. Anderenfalls kehrt das Verfahren wieder zum Schritt 402 zurück.

Bei einer weiteren Variante überprüft die Kontrolleinheit 36 nach dem Startschritt 200 in einem Schritt 502 wiederum den Status der bereits erläuterten Bremsvorrichtungen der beiden Hinterräder 14. Stellt die Kontrolleinheit 36 fest, dass mindestens eine der beiden Bremsvorrichtungen betätigt ist (Status $S_{B_HR}$ = 1 und/oder Status $S_{B_HL}$ = 1), so deaktiviert die Kontrolleinheit 36 die Differentialsperre 22 in dem Schritt 206 fahrerunabhängig, wie bereits erläutert.

**Patentansprüche**

1. Verfahren zum Betreiben eines Nutzfahrzeugs (10), mit einer von einem Antriebsmotor (20) angetriebenen Hinterachse (12), einem Hinterachs-Differential (24) an der Hinterachse (12) und einer zur Durchführung eines Allradantriebs (28, FWD) zuschaltbaren Vorderachse (16), **dadurch gekennzeichnet, dass**
eine Differentialsperre (22, DIFF_S) zur Sperrung des Hinterachs-Differentials (24) in Abhängigkeit einer Motorleistung (P) des Antriebsmotors (20) aktiviert wird, wobei die Motorleistung (P) mit einem vorgegebenen Leistungs-Grenzwert ($P_{lim1}$) verglichen wird, bevor die Differentialsperre (22, DIFF_S) aktiviert wird.

**2.** Verfahren nach Anspruch 1, **dadurch gekennzeichnet, dass** die Differentialsperre (22, DIFF_S) zur Sperrung des Hinterachs-Differentials (24) in Abhängigkeit von mindestens einer weiteren der folgenden Größen aktiviert wird:

- einer Hinterradschlupfgröße ($\mu_H$), die einen an der Hinterachse (12) auftretenden Antriebsradschlupf charakterisiert,
- einem Status ($S_{B_HR}$, $S_{B_HL}$) mindestens einer der Hinterachse (12) zugeordneten Bremsvorrichtung, und
- einem Status ($S_{FWD}$) bezüglich des Allradantriebs (FWD).

**3.** Verfahren nach Anspruch 2, **dadurch gekennzeichnet, dass** die Hinterradschlupfgröße ($\mu_H$) aus einem Verhältnis zwischen der momentanen Fahrtgeschwindigkeit (v) des Nutzfahrzeugs (10) und einer an der Hinterachse (12) auftretenden Radumfangsgeschwindigkeit ($v_H$) ermittelt wird.

**4.** Verfahren nach Anspruch 2 oder 3, **dadurch gekennzeichnet, dass** die Hinterradschlupfgröße ($\mu_H$) mit mindestens einem vorgegebenen Schlupf-Grenzwert ($\mu_{lim1}$, $\mu_{lim2}$) verglichen wird, bevor die Differentialsperre (22, DIFF_S) aktiviert wird.

**5.** Verfahren nach einem der Ansprüche 2 bis 4, **dadurch gekennzeichnet, dass** der Allradantrieb (28, FWD) aktiviert ist, bevor die Differentialsperre (22, DIFF_S) aktiviert wird.

**6.** Verfahren nach einem der vorhergehenden Ansprüche,
**dadurch gekennzeichnet, dass** die aktivierte Differentialsperre (22, DIFF_S) in Abhängigkeit von mindestens einer der folgenden Größen deaktiviert wird:

- einer Hinterradschlupfgröße ($\mu_H$), die einen an der Hinterachse (12) auftretenden Antriebsradschlupf charakterisiert,
- einer Motorleistung (P) des Antriebsmotors (20),
- einem Status ($S_{B_HR}$, $S_{B_HL}$) mindestens einer der Hinterachse (12) zugeordneten Bremsvorrichtung, und
- einem Status ($S_{DIFF}$) bezüglich der Differentialsperre (22, DIFF_S).

**7.** Nutzfahrzeug, insbesondere Traktor (10), mit einer Anordnung (34) zur Durchführung des Verfahrens nach einem der Ansprüche 1 bis 6.

## Claims

**1.** Method for operating a utility vehicle (10), having a rear axle (12) which is driven by a drive engine (20), a rear-axle differential (24) on the rear axle (12) and a front axle (16) which can be connected so as to carry out all wheel drive (28, FWD),
**characterized in that**
a differential lock (22, DIFF_S) for locking the rear-axle differential (24) is activated as a function of an engine power level (P) of the drive engine (20), wherein the engine power level (P) is compared with a predefined power limiting value ($P_{lim1}$) before the differential lock (22, DIFF_S) is activated.

**2.** Method according to Claim 1, **characterized in that** the differential lock (22, DIFF_S) is activated to lock the rear-axle differential (24) as a function of at least one further variable of the following variables:

- a rear wheel slip variable ($\mu_H$) which characterizes a drive wheel slip which occurs at the rear axle (12),
- a status ($S_{B_HR}$, $S_{B_HL}$) of at least one brake device which is assigned to the rear axle (12), and
- a status ($S_{FWD}$) relating to the all wheel drive (FWD).

**3.** Method according to Claim 2, **characterized in that** the rear wheel slip variable ($\mu_H$) is determined from a ratio between the instantaneous velocity (v) of the utility vehicle (10) and a wheel circumferential speed ($v_H$) which occurs at the rear axle (12).

**4.** Method according to Claim 2 or 3, **characterized in that** the rear wheel slip variable ($\mu_H$) is compared with at least one specified slip limiting value ($\mu_{lim1}$, $\mu_{lim2}$) before the differential lock (22, DIFF_S) is activated.

**5.** Method according to one of Claims 2 to 4, **characterized in that** the all wheel drive (28, FWD) is activated before the differential lock (22, DIFF_S) is activated.

**6.** Method according to one of the preceding claims, **characterized in that** the activated differential lock (22, DIFF_S) is deactivated as a function of at least one of the following variables:

- a rear wheel slip variable ($\mu_H$) which characterizes a drive wheel slip occurring at the rear axle (12),
- an engine power level (P) of the drive engine (20),
- a status ($S_{B_HR}$, $S_{B_HL}$) of at least one brake device which is assigned to the rear axle (12), and
- a status ($S_{DIFF}$) relating to the differential lock (22, DIFF_S).

**7.** Utility vehicle, in particular tractor (10), having an arrangement (34) for carrying out the method according to one of Claims 1 to 6.

**Revendications**

**1.** Procédé de fonctionnement d'un véhicule utilitaire (10) comprenant un essieu arrière (12) entraîné par un moteur d'entraînement (20), un différentiel d'essieu arrière (24) au niveau de l'essieu arrière (12) et un essieu avant (16) pouvant être activé par la mise en œuvre d'une transmission intégrale (28, FWD), **caractérisé en ce que**
un dispositif de blocage de différentiel (22, DIFF_S) destiné à bloquer le différentiel d'essieu arrière (24) est activé en fonction d'une puissance moteur (P) du moteur d'entraînement (20), la puissance moteur (P) étant comparée à une valeur de puissance limite prédéterminée ($P_{lim1}$) avant l'activation du dispositif de blocage de différentiel (22, DIFF_S).

**2.** Procédé selon la revendication 1, **caractérisé en ce que** le dispositif de blocage de différentiel (22, DIFF_S) destiné à bloquer le différentiel d'essieu arrière (24) est activé en fonction d'au moins une autre des grandeurs suivantes :

- une grandeur de patinage de roue arrière ($\mu_H$) qui caractérise un patinage de la roue d'entraînement se produisant sur l'essieu arrière (12),
- un état ($S_{B_HR}$, $S_{B_HL}$) d'au moins un dispositif de freinage associé à l'essieu arrière (12), et
- un état ($S_{FWD}$) relatif à la transmission intégrale (FWD).

**3.** Procédé selon la revendication 2, **caractérisé en ce que** la grandeur de patinage de roue arrière ($\mu_H$) est déterminée à partir d'un rapport entre la vitesse de marche instantanée (v) du véhicule utilitaire (10) et une vitesse circonférentielle de roue ($v_H$) se produisant sur l'essieu arrière (12).

**4.** Procédé selon la revendication 2 ou 3, **caractérisé en ce que** la grandeur de patinage de roue arrière ($\mu_H$) est comparée à au moins une valeur de patinage limite prédéterminée ($\mu_{lim1}$, $\mu_{lim2}$) avant l'activation du dispositif de blocage de différentiel (22, DIFF_S).

**5.** Procédé selon l'une des revendications 2 à 4, **caractérisé en ce que** la transmission intégrale (28, FWD) est activée avant l'activation du dispositif de blocage de différentiel {22, DIFF_S).

**6.** Procédé selon l'une des revendications précédentes, **caractérisé en ce que** le dispositif de blocage de différentiel activé (22, DIFF_S) est désactivé en fonction de l'une au moins des grandeurs suivantes :

- une grandeur de patinage de roue arrière ($\mu_H$), qui caractérise un patinage de roue d'entraînement se produisant sur l'essieu arrière (12),
- une puissance moteur (P) du moteur d'entraînement (20),
- un état ($S_{B_HR}$, $S_{B_HL}$) d'au moins un dispositif de freinage associé à l'essieu arrière (12), et
- un état ($S_{DIFF}$) relatif au dispositif de blocage de différentiel (22, DIFF_S).

**7.** Véhicule utilitaire, notamment tracteur (10), comprenant un ensemble (34) destiné à mettre en œuvre le procédé selon l'une des revendications 1 à 6.

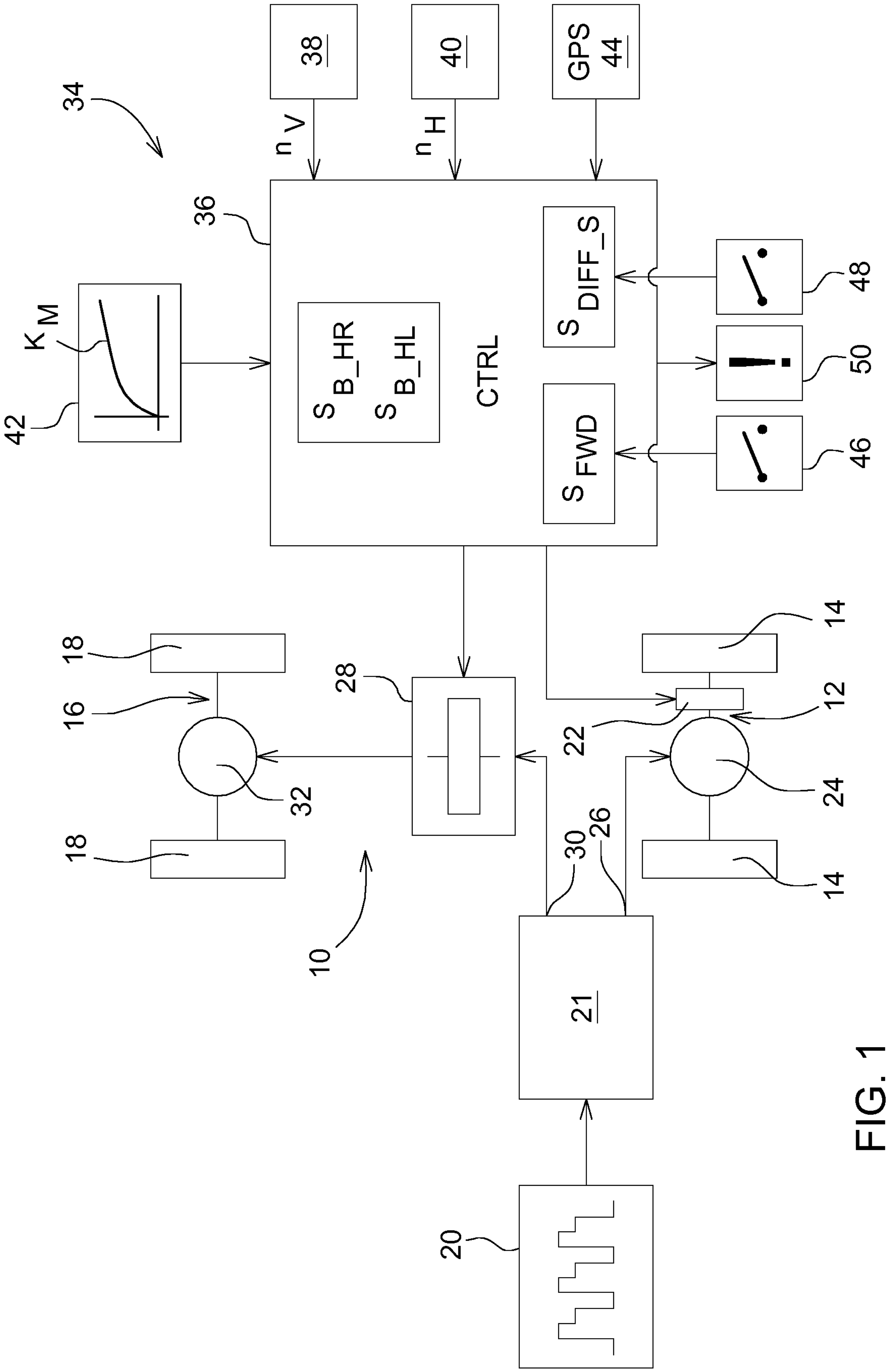
34
38
40
GPS
44
$n_V$
$n_H$
36
CTRL
$S_{B_HR}$
$S_{B_HL}$
$S_{DIFF_S}$
$S_{FWD}$
$K_M$
42
48
50
46
18
16
32
18
28
14
12
22
24
30
26
14
10
21
20

FIG. 1

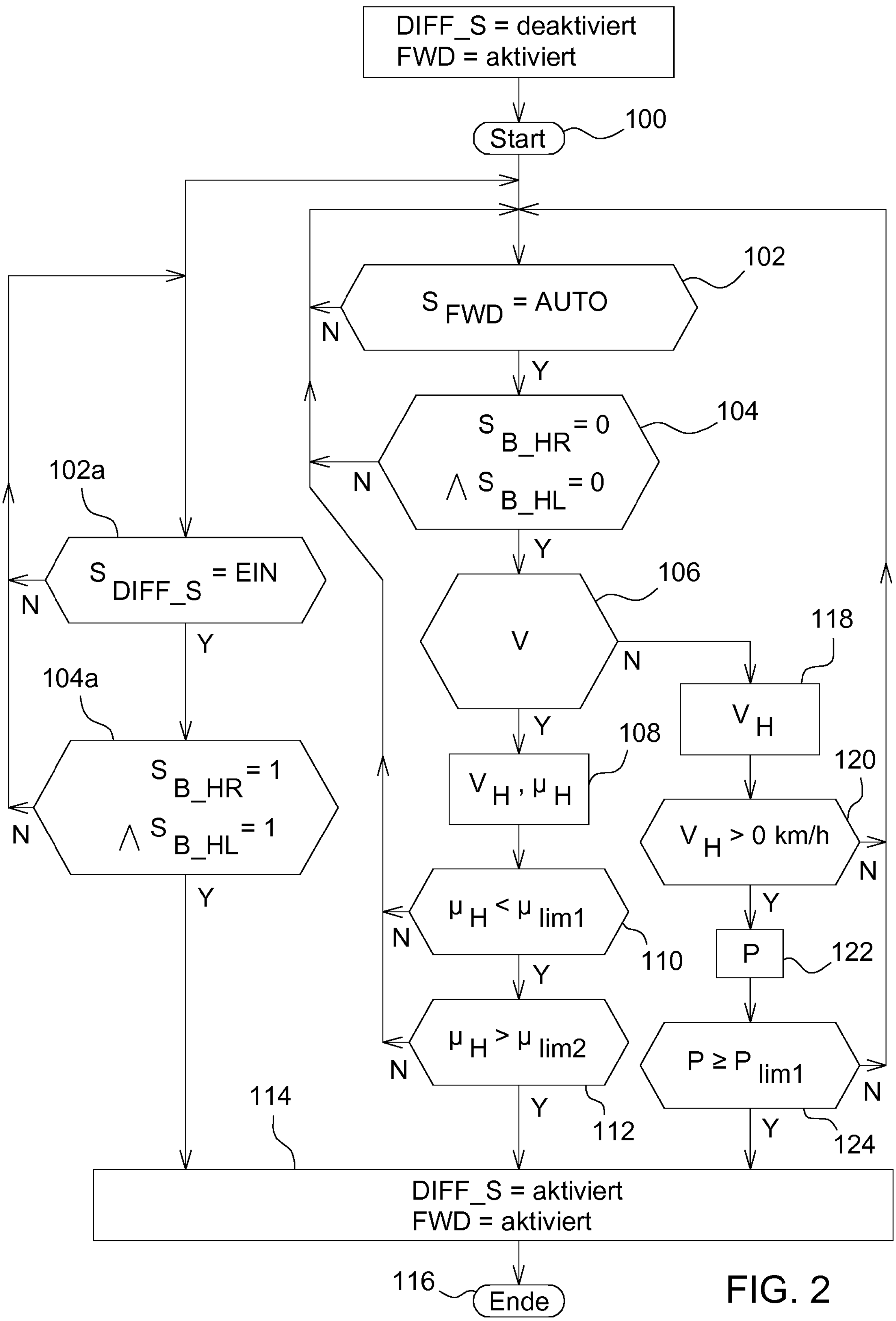
DIFF_S = deaktiviert
FWD = aktiviert
Start
100
S FWD = AUTO
102
N
Y
S B_HR = 0
∧ S B_HL = 0
104
N
Y
V
106
N
Y
118
V H
V H , μ H
108
120
V H > 0 km/h
N
Y
μ H < μ lim1
110
N
Y
P
122
μ H > μ lim2
N
Y
112
P ≥ P lim1
N
Y
124
102a
S DIFF_S = EIN
N
Y
104a
S B_HR = 1
∧ S B_HL = 1
N
Y
114
DIFF_S = aktiviert
FWD = aktiviert
116
Ende

FIG. 2

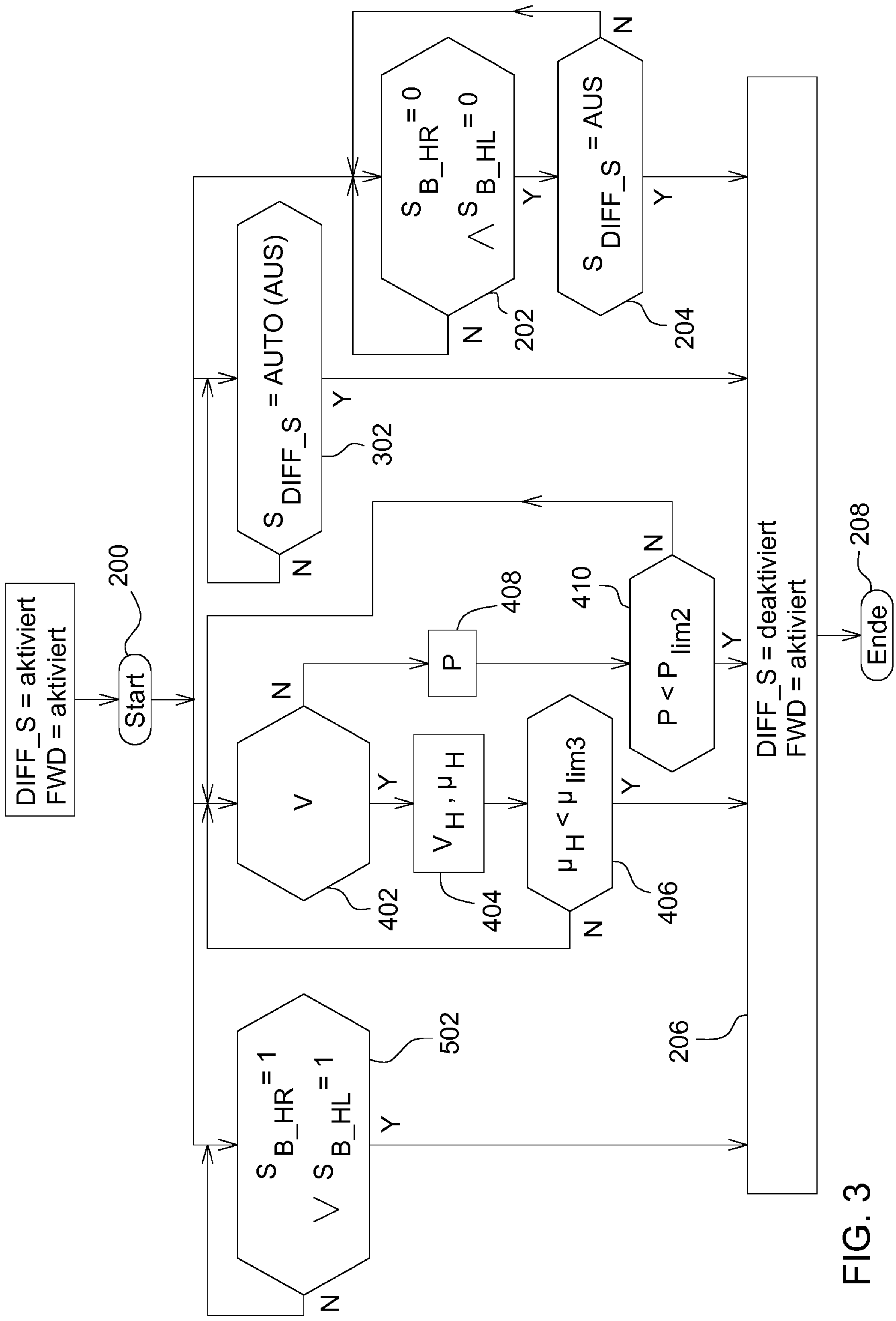
DIFF_S = aktiviert
FWD = aktiviert
200
Start
$S_{DIFF_S}$ = AUTO (AUS)
302
Y
N
$S_{B_HR} = 0$
$\wedge S_{B_HL} = 0$
202
$S_{DIFF_S}$ = AUS
204
V
402
$V_H$, $\mu_H$
404
$\mu_H < \mu_{lim3}$
406
P
408
$P < P_{lim2}$
410
$S_{B_HR} = 1$
$\vee S_{B_HL} = 1$
502
206
DIFF_S = deaktiviert
FWD = aktiviert
208
Ende

FIG. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102015212897 A1
- WO 0249896 A1
- GB 2414525 A
- EP 2730447 A1